# EUROPÄISCHE PATENTSCHRIFT

(11) **EP 1 389 161 B1**
(45) Veröffentlichungstag und Bekanntmachung des Hinweises auf die Patenterteilung: **21.11.2007**
(21) Anmeldenummer: 02742960.4
(22) Anmeldetag: 07.05.2002
(51) Int. Cl.: B29C 45/68

(54) **ANTRIEBSVORRICHTUNG, INSBESONDERE ZUM ANTRIEB EINES BEWEGBAREN TEILS DER SCHLIESSEINHEIT ODER DER EINSPRITZEINHEIT EINER KUNSTSTOFFSPRITZGIESSMASCHINE**
DRIVE MECHANISM, PARTICULARLY FOR A MOVEABLE PART OF A CLOSING UNIT OR THE INJECTION UNIT OF A PLASTIC INJECTION MOULDING MACHINE
DISPOSITIF D'ENTRAINEMENT SERVANT NOTAMMENT A ENTRAINER UNE PARTIE MOBILE DE L'UNITE DE FERMETURE OU DE L'UNITE D'INJECTION D'UNE PRESSE D'INJECTION DE MATIERES PLASTIQUES

(30) Priorität: 19.05.2001 DE 10124515
(43) Veröffentlichungstag der Anmeldung: 18.02.2004
(73) Patentinhaber: Bosch Rexroth Aktiengesellschaft, 97816 Lohr am Main (DE)
(72) Erfinder: DANTLGRABER, Jörg, 97816 Lohr am Main (DE)
(86) Internationale Anmeldenummer: PCT/EP2002/004994
(87) Internationale Veröffentlichungsnummer: WO 2002/096617

(56) Entgegenhaltungen:
- WO-A-01/89801
- WO-A-02/11970
- WO-A-92/11993
- DE-A- 4 111 594

## Beschreibung

Die Erfindung betrifft eine Antriebsvorrichtung, die insbesondere zum Antrieb eines bewegbaren Teils der Schließeinheit oder der Einspritzeinheit einer Kunststoffspritzgießmaschine vorgesehen ist und die die Merkmale aus dem Oberbegriff des Patentanspruchs 1 aufweist.

Innerhalb der Schließeinheit einer Kunststoffspritzgießmaschine bewegt die Antriebsvorrichtung die bewegliche Formaufspannplatte der Maschine. Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum andern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum andern sind ohne wesentliche Bewegung hohe Kräfte auszuüben. Derartige Anforderungen können sich außer bei der Schließeinheit auch bei der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluß daran die sich in der Form befindliche Kunststoffschmelze einem sogenannten Nachdruck ausgesetzt, so muß der Antrieb eine hohe Kraft ohne wesentliche Bewegung der Plastifizierschnecke aufbringen.

Aus der US-A 4,030,299 ist ein rein hydraulischer Antrieb für die bewegbare Formaufspannplatte einer Kunststoffspritzgießmaschine bekannt, der auch einen hydraulischen Kraftübersetzer enthält. Dieser weist einen bewegbaren Kolben kleiner Wirkfläche, einen weiteren bewegbaren Kolben großer Wirkfläche und einen Zylinder auf, der zusammen mit den Kolben einen mit einer Druckflüssigkeit gefüllten Druckraum einschließt. Der Zylinder ist ortsfest am Gestell der Spritzgießmaschine angeordnet. Zu dem Antrieb gehören außerdem Hydrozylinder, die zum Schließen und Öffnen der Form die bewegbare Formaufspannplatte verfahren. Im geöffneten Zustand der Form ist das Volumen des Druckraums des hydraulischen Kraftübersetzers minimal. Wird nun die bewegbare Formaufspannplatte von den Hydrozylindern im Sinne eines Schließens der Form verfahren, so wird der große Kolben des hydraulischen Kraftübersetzers mitgenommen, wobei sich das Volumen des Druckraums des hydraulischen Kraftübersetzers vergrößert und Druckmittel aus einem Behälter über ein Nachsaugventil in den Druckraum einströmt. Im Anschluß daran wird der kleine Kolben des hydraulischen Kraftübersetzers in den Druckraum hineingefahren und dadurch ein hoher Druck erzeugt, der über die große Wirkfläche des großen Kolbens eine hohe Schließkraft bewirkt. Der kleine Kolben wird durch Zufuhr von Druckflüssigkeit hydraulisch bewegt. Somit sind bei der Antriebsvorrichtung nach der US-A 4,030,299 für die Stellbewegung der bewegbaren Formaufspannplatte und für die Ausübung einer hohen Kraft verschiedene hydraulische Antriebskomponenten vorhanden. Zwischen dem Druckraum und dem Behälter fließt während der Stellbewegungen der Formaufspannplatte viel Druckflüssigkeit hin und her, was entsprechend große Ventile und Flüssigkeitskanäle bedingt.

Eine Antriebsvorrichtung mit den Merkmalen aus dem Oberbegriff des Patentanspruchs 1 ist aus der DE 41 11 594 A1 bekannt. Bei dieser Antriebsvorrichtung ist mit der beweglichen Formaufspannplatte ein Hydrozylinder mit einer großen Wirkfläche fest verbunden. Die Einheit aus beweglicher Formaufspannplatte und Hydrozylinder kann von einem Elektromotor über ein Getriebe, das eine Hubspindel und eine Spindelmutter umfaßt, verfahren werden, um die Form schnell zu schließen und schnell zu öffnen. Die hohe Schließkraft wird durch Druckbeaufschlagung des mit der Formaufspannplatte verfahrbaren Hydrozylinders aufgebracht. Dabei wird die gesamte Reaktionskraft über die Spindel und die Spindelmutter auf das Maschinengestell abgeleitet. Die Spindel muß deshalb sehr stark ausgelegt werden, ist für die Stellbewegung überdimensioniert und ist entsprechend teuer.

Der Erfindung liegt die Aufgabe zugrunde, eine Antriebsvorrichtung, die die Merkmale aus dem Oberbegriff des Patentanspruchs 1 aufweist, so weiterzuentwickeln, daß mit geringem Aufwand einerseits eine schnelle Stellbewegung möglich ist und andererseits auch eine große Kraftwirkung erzielt werden kann.

Das gesetzte Ziel wird dadurch erreicht, daß die Antriebsvorrichtung mit den Merkmalen aus dem Oberbegriff erfindungsgemäß auch die Merkmale aus dem kennzeichnenden Teil des Patentanspruchs 1 aufweist. Bei einer solchen Antriebsvorrichtung wird somit ein hydraulischer Kraftübersetzer verwendet, in dessen Druckraum zumindest während der Stellbewegung und der anschließenden Ausübung einer hohen Kraft ein bestimmtes Volumen einer Druckflüssigkeit eingeschlossen ist, sieht man einmal von Volumenänderungen aufgrund einer Druckänderung ab. Sonstige hydraulische Komponenten sind vom Prinzip her für eine erfindungsgemäße Antriebsvorrichtung nicht notwendig. Der kleine, erste Hydrokolben des hydraulischen Kraftübersetzers ist erfindungsgemäß mechanisch mit dem durch den insbesondere als Elektromotor ausgebildeten Antriebsmotor axial verfahrenbaren Antriebselement verbunden. Weiterhin ist gemäß der Erfindung für die Stellbewegung eines anzutreibenden Elements die Hydroeinheit als Ganzes verfahrbar, wodurch die Geschwindigkeit des mit dem anzutreibenden Element mechanisch gekoppelten großen, zweiten Hydrokolbens gleich der hohen Geschwindigkeit des vom Elektromotor axial verfahrenen Antriebselements ist.
Um eine hohe Kraft ausüben zu können, wird das Zwischenteil des hydraulischen Kraftübersetzers gegen eine Verschiebung relativ zu einem ortsfesten Gestell blockiert, so daß durch ein weiteres Verfahren des ersten Hydrokolbens um einen relativ kleinen Weg im Druckraum des Kraftübersetzers ein hoher Druck aufgebaut werden kann, der an der großen Wirkfläche des zweiten Hydrokolbens eine hohe Kraft erzeugt. Dabei ist über das Antriebselement nur ein der Wirkfläche des ersten Hydrokolbens entsprechender Anteil der Kraft abzustützen. Der Antriebsmotor und das Antriebselement sind insbesondere bei sogenannten Zweiplattenmaschinen bezüglich des bewegbaren Teils bevorzugt so angeordnet, daß beim Aufbau und beim Ausüben der großen Kraft das Antriebselement auf Zug beansprucht wird. Wenn hier von einem Antriebselement die Rede ist, so schließt das selbstverständlich auch ein, das die Antriebsvorrichtung mehrere parallel miteinander wirkende Antriebselemente aufweist.

Um die Hydroeinheit als Ganzes verfahren zu können, sind deren drei Bauteile derart miteinander gekoppelt, daß das Zwischenteil und der zweite Hydrokolben dem Antriebselement folgen.

Vorteilhafte Ausgestaltungen einer erfindungsgemäßen Antriebsvorrichtung kann man den Unteransprüchen entnehmen.

Insbesondere bei großen Kunststoffspritzgießmaschinen von hoher Zuhaltekraft für die Form ist auch zum Öffnen der Form eine relativ hohe Aufreißkraft notwendig, die im Bereich zwischen 5% und 10% der Zuhaltekraft liegt. Da beim Aufrei-ßen das Antriebselement umgekehrt wie beim Zuhalten, bei einer Zweiplattenmaschine also auf Druck, belastet wird, kann es sein, daß sich die Dimensionierung des Antriebselements eher nach der notwendigen Aufreißkraft als nach der notwendigen Zuhaltekraft richten muß, um ein Einknicken des Antriebselements zu verhindern. Hier wird durch eine Ausgestaltung gemäß Patentanspruch 2 erreicht, daß auch bei Verwendung eines kostengünstigen, auf die Zugbelastung beim Zuhalten ausgelegten Antriebselements keine Knickgefahr beim Aufreißen besteht. Es wird also wie für das Zuhalten auch für das Aufreißen der Form einer Kunststoffspritzgießmaschine ein hydraulischer Kraftübersetzer für jedes Antriebselement vorgesehen, so daß das oder die Antriebselemente nur wenig belastet sind. Dabei bildet der den kleinen Durchmesser aufweisende Kolbenabschnitt eines als Stufenkolben ausgeführten dritten Hydrokolbens den kleinen Kolben des beim Aufreißen wirksamen hydraulischen Kraftübersetzers. Mit dem großen Kolbenabschnitt wird der dritte Hydrokolben während der Stellbewegung mit großer Kraft in Richtung der Stellbewegung gegen einen relativ zu dem Gehäuse, an dem oder in dem sich der erste Hydrokolben und der dritte Hydrokolben befinden, ortsfesten Anschlag gedrückt. Die Kraft ist größer als die Kraft, die von einem den ersten Druckraum und die Wirkfläche des ersten Hydrokolbens beaufschlagenden Vorspanndruck am ersten Hydrokolben erzeugt wird, wobei der Vorspanndruck so hoch gewählt wird, daß er über dem zur Beschleunigung und zum Verfahren des zweiten Hydrozylinders und des Zwischenteils im ersten Druckraum notwendigen Druck liegt. Der dritte Hydrokolben wirkt dann wie ein fester Anschlag für den ersten Hydrokolben. Der hohe Vorspanndruck im ersten Druckraum läßt das Flüssigkeitspolster im ersten Druckraum wie eine starre Verbindung zwischen dem ersten Hydrokolben und dem Gehäuse erscheinen. Andererseits kann der an den großen Kolbenabschnitt des dritten Hydrokolbens angrenzende, dritte Druckraum von Druck entlastet werden, so daß der dritte Hydrokolben zum Aufreißen der Form verschoben werden kann.

Ein dritter Hydrokolben kann grundsätzlich seitlich des Antriebselements und/oder des ersten Hydrokolbens angeordnet sein. Vorzugsweise liegt er jedoch gemäß Patentanspruch 3 in Flucht zum und vor dem ersten Hydrokolben.

Wenn gemäß Patentanspruch 4 die erste Wirkfläche des dritten Hydrokolbens größer ist als die Wirkfläche des ersten Hydrokolbens, erhält man den Kraftüberschuß am dritten Hydrokolben schon dann, wenn der dritte Druckraum und der erste Druckraum mit dem gleichen Druck beaufschlagt sind. Dieser Druck kann mit einem einzigen hydraulischen Gerät eingestellt werden. Vorzugsweise sind gemäß Patentanspruch 5 der erste Druckraum und der dritte Druckraum zur Beaufschlagung mit demselben Druck mit derselben Druckquelle, zum Beispiel mit einer Hydropumpe verbindbar. Für den Wechsel zwischen Druckbeaufschlagung und Druckentlastung des dritten Druckraums wird gemäß Patentanspruch 6 zweckmäßigerweise ein schaltbares Ventil verwendet.

Gemäß Patentanspruch 7 grenzt der vierte Hydrokolben an einen Druckraum mit einer relativ zum Maschinengestell ortsfesten Begrenzungswand an. Der vierte Hydrokolben kann also fest mit dem zweiten Hydrokolben oder fest mit dem Maschinengestell bzw. der gestellfesten Formaufspannplatte verbunden oder wenigstens abstützbar sein, wobei sich der entsprechende Druckraum dann zwischen dem vierten Hydrokolben und der Formaufspannplatte bzw. dem zweiten Hydrozylinder befindet. Bevorzugt wird letztere Ausführung, da dann die fluidische Verbindung von dem Druckraum am kleinen Kolbenabschnitt des dritten Hydrokolbens zu dem Druckraum am vierten Hydrokolben kurz sein kann, insbesondere wenn sich der Druckraum am kleinen Kolbenabschnitt ebenfalls im zweiten Hydrokolben befindet.

Gemäß Patentanspruch 8 kann der vierte Hydrokolben auch zwischen dem zweiten Hydrokolben und dem Zwischenteil wirksam sein, wobei er bezüglich des Zwischenteils oder des zweiten Hydrokolbens fixierbar, also auch beweglich, oder fixiert, also dauernd unbeweglich, ist und mit dem jeweils anderen Teil der beiden Teile Zwischenteil und Hydrokolben einen Druckraum begrenzt, der mit einem Druckraum am zweiten Kolbenabschnitt des dritten Hydrokolbens verbunden ist.

Insbesondere befindet sich gemäß Patentanspruch 9 der vierte Hydrokolben im oder am Zwischenteil oder im oder am zweiten Hydrokolben und ist über eine Kolbenstange mit einem fünften Hydrokolben im jeweils anderen Teil verbunden. Der fünfte Hydrokolben dient zum Beispiel dazu, um nach dem Schließen der Form, wenn der zweite Hydrokolben bzw. die mit diesem verbundene bewegliche Formaufspannplatte an der ortsfesten Formaufspannplatte anliegt, das Zwischenteil noch etwas gegen den zweiten Hydrokolben in eine Verriegelungsstellung zu verschieben, sofern es nur an diskreten Stellen blockiert werden kann.

Bei einer Ausbildung gemäß Patentanspruch 10 ist eine einmalige Justage von Zwischenteil und zweitem Hydrokolben zueinander bei Einsatz eines neuen Formwerkzeugs mithilfe des fünften Hydrokolbens möglich. Nach der Justage kann der fünfte Hydrokolben gegenüber dem Teil, an dem er sich befindet, blokkiert bleiben, weil für den vierten Hydrokolben am anderen Teil durch den sechsten Hydrokolben ein Anschlag realisiert ist, der beim Aufbau der hohen Zuhaltekraft und der damit verbundenen geringen Bewegung des zweiten Hydrokolbens nachgeben kann, zum Aufreißen der Form dagegen durch Beaufschlagung mit Druck als fester Anschlag wirkt. Gemäß Patentanspruch 12 ist der sechste Hydrokolben vorzugsweise in Flucht mit dem vierten Hydrokolben angeordnet.

Für die Herstellung der fluidischen Verbindungen zwischen den einzelnen an die Hydrokolben angrenzenden Druckräume ist es günstig, wenn sich gemäß den Patentansprüchen 13 und 14 der vierte Hydrokolben oder der vierte und der fünfte Hydrokolben am selben Gehäuse wie der erste und der dritte Hydrokolben befinden.

Hier sei ganz allgemein darauf hingewiesen, daß die Aufnahmeräume für die Hydrokolben jeweils unmittelbar im Zwischenteil oder im zweiten Hydrokolben oder damit verbundenen Platten ausgebildet sein oder auch separate Zylinder mit den Aufnahmeräumen vorgesehen sein können, die am Zwischenteil oder am zweiten Hydrokolben befestigt sind.

Drei Ausführungsbeispiele einer erfindungsgemäßen Antriebsvorrichtung, die jeweils für eine sogenannte Zweiplatten-Kunststoffspritzgießmaschine bestimmt sind, sind in den Zeichnungen dargestellt. Anhand dieser Zeichnungen wird die Erfindung nun näher erläutert.

Es zeigen
- Figur 1: das erste Ausführungsbeispiel, bei dem ein vierter Hydrokolben in einer zylindrischen Aufnahme des zweiten Hydrokolbens geführt und bei geschlossener Form zu deren Aufreißen an der festen Formaufspannplatte abstützbar ist,
- Figur 2: das zweite Ausführungsbeispiel, bei dem der vierte Hydrokolben ebenfalls im zweiten Hydrokolben geführt ist, außerdem über eine Kolbenstange mit einem sechsten Hydrokolben verbunden ist und mit diesem der lösbaren Koppelung von zweitem Hydrokolben und Zwischenteil dient, und
- Figur 3: das dritte Ausführungsbeispiel, das ähnlich wie das zweite Ausführungsbeispiel aufgebaut ist, bei dem jedoch ein im zweiten Hydrokolben geführter, sechster Hydrokolben einen beweglichen Anschlag für den vierten Hydrokolben bildet.

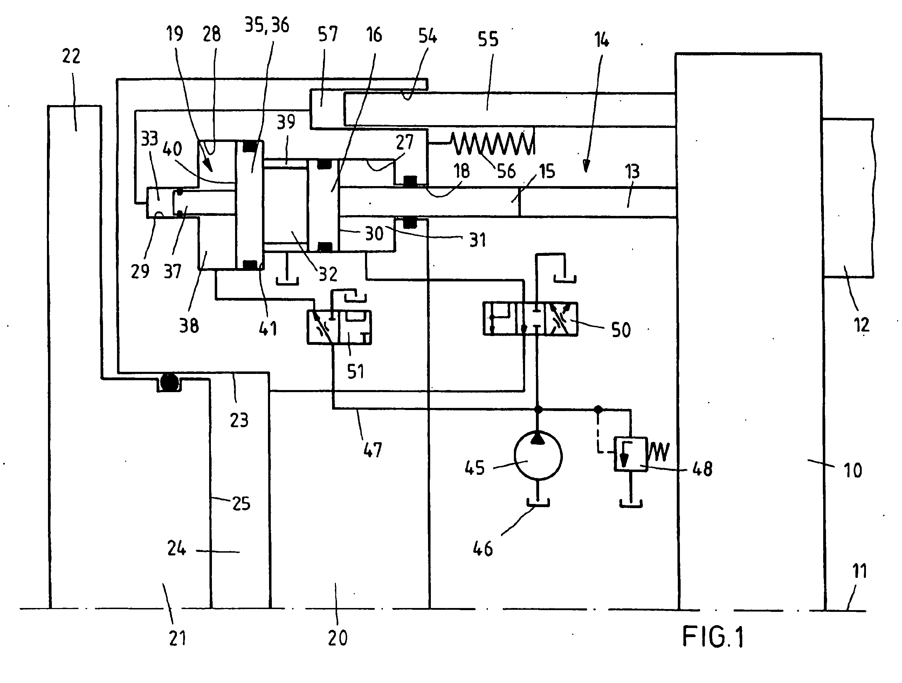

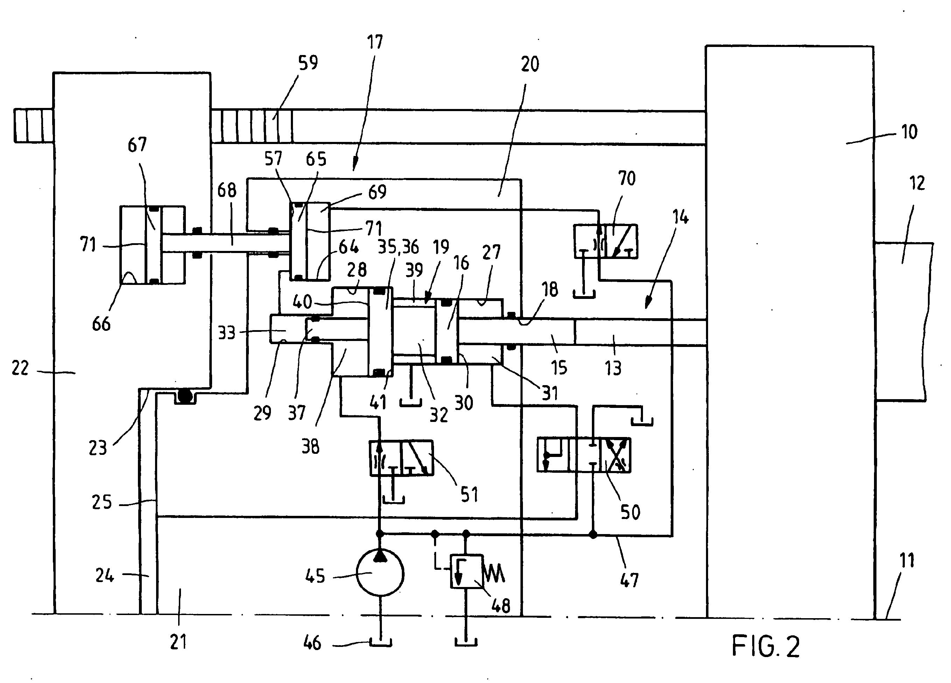

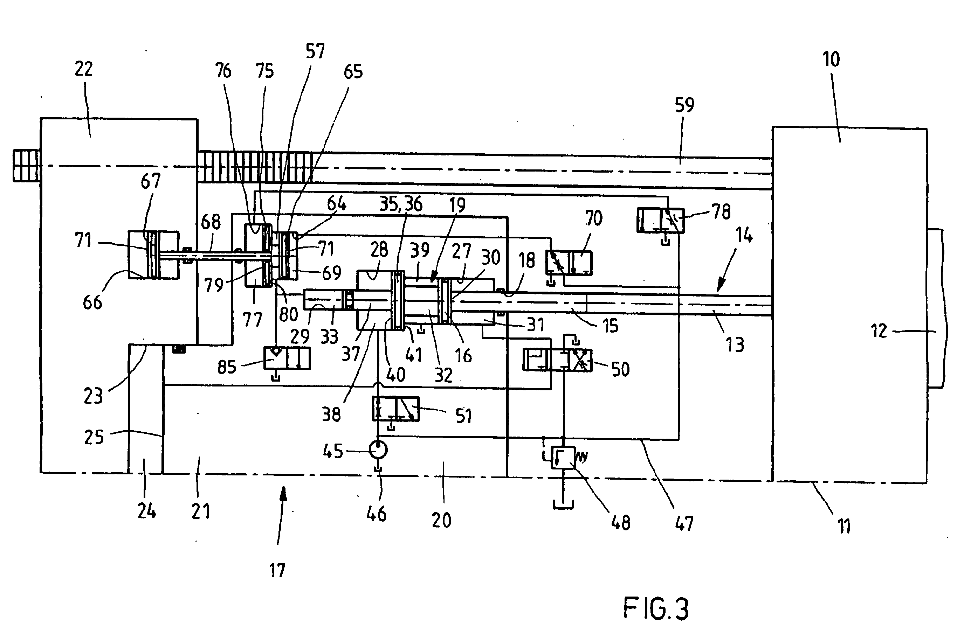

Bei den gezeigten Ausführungsbeispielen sind in einer feststehenden Formaufspannplatte 10, bezüglich einer Mittelachse 11 einander diametral gegenüberliegend, in nicht näher dargestellter Weise über Pendelrollenlager zwei Spindelmuttern axial ortsfest drehbar gelagert, von denen jede von einem an der Formaufspannplatte 10 befestigten Elektromotor 12 drehend antreibbar ist. Jede Spindelmutter steht über Kugeln mit einem Gewindeabschnitt 13 einer gegen Drehen gesicherten und geradlinig verfahrbaren Hubspindel 14 in Eingriff. Von dem Gewindeabschnitt 13 einer Hubspindel 14 aus erstreckt sich eine Kolbenstange 15 eines ersten Hydrokolbens 16, der ein kleiner Kolben eines hydraulischen Kraftübersetzers 17 ist, parallel zur Mittelachse 11 abgedichtet durch einen Durchgang 18 hindurch bis in einen drei sich in ihren Durchmessern voneinander unterscheidende zylindrische Abschnitte aufweisenden Hohlraum 19 eines zweiten Hydrokolbens 20, der der große Kolben des hydraulischen Kraftübersetzers 17 ist. Als zweiter Hydrokolben wird hier ein Maschinenteil bezeichnet, das im wesentlichen plattenförmig ausgebildet ist und einen vorspringenden Kolbenabschnitt 21 (Figuren 2 und 3), der in eine entsprechende Kolbenaufnahme 23 eines Zwischenteils 22 des hydraulischen Kraftübersetzers 17 eintaucht, oder rückspringend eine Kolbenaufnahme 23 (Figur 1), in die ein vorspringender Kolbenabschnitt 21 des Zwischenteils 22 eintaucht, aufweist. Der Kolbenabschnitt 21 hat eine an einen Druckraum 24 angrenzende Wirkfläche 25, die wesentlich größer, zum Beispiel dreißig mal so groß wie die Wirkfläche 31 eines Hydrokolben 16 ist. Die bewegliche Formaufspannplatte der Maschine ist an dem Hydrokolben 20 befestigt und in nicht näher dargestellter Weise entlang von Holmen in Richtung der Mittelachse 11 geführt.

Auf den Durchgang 18 folgt im Hydrokolben 20 zunächst ein Hohlraumabschnitt 27, dessen Durchmesser etwa dreimal so groß wie der Durchmesser der Kolbenstange 15 ist. Der folgende Hohlraumabschnitt 28 hat einen größeren Durchmesser und ist kürzer als der Hohlraumabschnitt 27. Der Durchmesser des letzten, sacklochartigen Hohlraumabschnitts 29 schließlich ist etwa so groß wie der Durchmesser des Durchgangs 18 und damit der Kolbenstange 15. Der Hydrokolben 16 befindet sich in dem Hohlraumabschnitt 27 und grenzt kolbenstangenseitig mit einer ringförmigen Wirkfläche 30 an einen ringförmigen Druckraum 31 an. Kolbenstangenabseitig trägt der Hydrokolben 16 einen kurzen Stößel 32.

Ein dritter Hydrokolben 35 ist als Stufenkolben ausgebildet und befindet sich mit seinem Kolbenabschnitt 36 großen Durchmessers in dem Hohlraumabschnitt 28 und taucht mit einem Kolbenabschnitt 37 kleinen Durchmessers plungerartig in den Hohlraumabschnitt 29 ein. Der Freiraum vor dem Kolbenabschnitt 37 ist ein mit Druckmittel gefüllter Druckraum, der mit 33 bezeichnet sei. Auf der dem Hydrokolben 16 abgewandten Seite des Kolbenabschnitts 36 befindet sich ein ringförmiger Druckraum 38, der mit Systemdruck beaufschlagt oder von Druck entlastet werden kann. Der Raum 39 zwischen den beiden Hydrokolben 16 und 35 ist dauernd von Druck entlastet. Durch Druckbeaufschlagung der ringförmigen Wirkfläche 40, die größer ist als die ringförmige Wirkfläche 30 am Hydrokolben 16, von Seiten des Druckraums 38 aus kann der Hydrokolben 35 mit dem Kolbenabschnitt 36 gegen die einen axialen Anschlag 41 darstellende Stufe zwischen den beiden Hohlraumabschnitten 27 und 28 gedrückt werden.

Den Druckräumen 31 und 38 kann ein flüssiges Druckmittel zugeführt werden, das von einer Hydropumpe 45 aus einem Tank 46 angesaugt und in eine Pumpenleitung 47 gefördert wird, an die zur Einstellung eines Systemdruckes ein Druckbegrenzungsventil 48 angeschlossen ist. Ein erstes Ventil 50 kann aus einer mittleren Arbeitsstellung in zwei seitliche Arbeitsstellungen umgeschaltet werden. In der mittleren Arbeitsstellung des Ventils 50 ist der Druckraum 31 am Hydrokolben 16 mit dem Druckraum 24 am Kolbenabschnitt 21 des Hydrokolben 20 fluidisch verbunden. In einer ersten seitlichen Arbeitsstellung ist der Druckraum 31 gedrosselt an die Pumpenleitung.47 angeschlossen und der Druckraum 24 zum Tank entlastet. In der anderen seitlichen Arbeitsstellung sind beide Druckräume 24 und 31 zum Tank entlastet. Ein zweites Schaltventil 51 kann zwei Arbeitsstellungen einnehmen, wobei der Druckraum 38 in der einen Arbeitsstellung gedrosselt mit der Pumpenleitung 47 verbunden und in der anderen Arbeitsstellung zum Tank entlastet ist.

Das Zwischenteil 22 des hydraulischen Kraftübersetzers 17 ist bei allen drei gezeigten Ausführungsbeispielen über eine lösbare Koppelungseinrichtung fest mit dem Hydrokolben 20 verbindbar, so daß während des Schließens der Form, also während der Stellbewegung, Hydrokolben 20 und Zwischenteil 22 als Einheit verfahrbar sind. Nach dem Schließen der Form wird die Koppelung zwischen dem Hydrokolben 20 und dem Zwischenteil 22 gelöst und das Zwischenteil relativ zum Maschinengestell festgehalten. Grundsätzlich kann die Blockiereinrichtung zwischen dem Zwischenteil und dem Maschinengestell oder der zu diesem festen Formaufspannplatte so gestaltet sein, das innerhalb einer bestimmten Strecke eine Blockierung in infiniten Abständen an jeder beliebigen Stelle möglich ist. Hinsichtlich dem Ausführungsbeispiel nach Figur 1 sei eine solche Möglichkeit als gegeben angenommen.

Bei dem Ausführungsbeispiel nach Figur 1 besitzt der Hydrokolben 20 in gleichmäßigen Abständen um die Mittelachse 11 verteilt mehrere sacklochartige zylindrische Aufnahmen 54, die zur festen Formaufspannplatte 10 hin offen sind. In jeder Aufnahme 54 ist als vierter Hydrokolben des Ausführungsbeispiels nach Figur 1 ein Plungerkolben 55 geführt, der durch eine Feder 56 in der Aufnahme 54 gehalten ist, aus der Aufnahme herausragt und sich bei geschlossener Form an der festen Formaufspannplatte 10 abstützen kann. Der Druckraum 57 in der Aufnahme 54 vor dem Plungerkolben 55 ist mit dem Druckraum 33 vor dem Kolbenabschnitt 37 des Hydrokolbens 35 verbunden.

Bei den Ausführungsbeispielen nach den Figuren 2 und 3 ist das Zwischenteil 22 mit Hilfe von an der festen Formaufspannplatte befestigten und sich in Richtung der Mittelachse 11 erstreckenden verzahnten Verriegelungsstangen 59 an diskreten, gering voneinander beabstandeten Stellen mit der festen Formaufspannplatte 10 und damit dem Maschinengestell verriegelbar. Der Hydrokolben 20 nimmt in jedem von mehreren gleichmäßig um die Mittelachse 11 verteilten zylindrischen Hohlräumen 64 einen vierten Hydrokolben 65 auf. Ebenso nimmt das Zwischenteil 22 in jedem von mehreren zylindrischen Hohlräumen 66, die mit den Hohlräumen 64 im Hydrokolben 20 fluchten, jeweils einen fünften Hydrokolben 67 auf. Die beiden in Flucht zueinander liegenden Hydrokolben 65 und 67 sind über eine Kolbenstange 68 fest miteinander verbunden. Der kolbenstangenabseitige Druckraum 69 am Hydrokolben 65 ist über ein Schaltventil 70 mit zwei Arbeitsstellungen entweder gedrosselt mit der Pumpenleitung 47 verbunden oder zum Tank entlastet. Die kolbenstangenabseitigen, kreiszylindrischen Wirkflächen 71 der beiden Hydrokolben 65 und 67 sind gleich groß. Der kolbenstangenseitige Druckraum 57 am Hydrokolben 65, der dem gleich bezeichneten Druckraum aus Figur 1 entspricht, ist dauernd mit dem Druckraum 33 am Kolbenabschnitt 37 des Stufenkolbens 35 verbunden.

Bei der Ausführung nach Figur 2 kann der Hydrokolben 65 kolbenstangenseitig unmittelbar am Hydrokolben 20 anliegen. Bei dem Ausführungsbeispiel nach Figur 3 dagegen ist der Anschlag auf der Seite der Kolbenstange 68 für den Hydrokolben 65 durch einen sechsten Hydrokolben 75 gebildet und wirksam und unwirksam schaltbar. Der Hydrokolben 75 hat einen größeren Außendurchmesser als die Hydrokolben 65 und 67 und befindet sich in einem sich auf Seiten der Kolbenstange 68 an den Hohlraum 64 anschließenden und im Durchmesser größeren Hohlraum 76. Die Kolbenstange 68 tritt abgedichtet durch eine zentrale Öffnung des Hydrokolbens 75 hindurch. Der Druckraum 77 auf der dem Hydrokolben 65 abgelegenen Seite des Hydrokolbens 75 ist über ein Schaltventil 78 mit zwei Arbeitsstellungen entweder gedrosselt mit der Pumpenleitung 47 verbunden oder zum Tank entlastet. Bei Beaufschlagung des Druckraums 77 und damit einer ringförmigen Wirkfläche 79 am Hydrokolben 75 mit Systemdruck liegt der Hydrokolben 75 an der Stufe 80 zwischen den beiden Hohlräumen 64 und 76 an und wirkt wie eine feste Begrenzung des Hohlraums 64. Im Druckraum 69 anstehender Systemdruck vermag den Hydrokolben 75 nicht von der Stufe abzuheben, da die Wirkfläche 79 an dem Hydrokolben 75 größer als die Wirkfläche 71 am Hydrokolben 65 ist. Der Hydrokolben 65 liegt über einen gegenüber dem Durchmesser der Kolbenstange 68 einen vergrößerten Durchmesser aufweisenden Bund an dem Hydrokolben 75 an. Der ringförmige Druckraum zwischen den beiden Hydrokolben 65 und 75 entspricht dem Druckraum 57 des Ausführungsbeispiels nach Figur 2 und ist mit dem Druckraum 33 am Kolbenabschnitt 37 des Hydrokolben 35 verbunden. Bei Entlastung des Druckraums 77 vermag der Hydrokolben 65 den Hydrokolben 75 von der Stufe 80 abzuheben, wobei sich das Volumen des Druckraums 57 zwischen den beiden Hydrokolben vergrößert. Bei Annäherung des Hydrokolbens 75 an die Stufe verkleinert sich das Volumen. Um die Volumenänderung ausgleichen zu können, sind die beiden Druckräume 33 und 57 in einer zweiten von zwei Arbeitsstellungen eines Schaltventils 85 mit Tank verbunden. In der ersten Arbeitsstellung sind die beiden Druckräume leckagefrei abgesperrt.

Bei dem Ausführungsbeispiel nach Figur 3 wird nach dem Anbringen eines neuen Werkzeugs an dem Hydrokolben 20 das Zwischenteil 22 bei Druckbeaufschlagung der Druckräume 69 und 77 mit Systemdruck mit Hilfe des Hydrokolbens 67 in eine solche möglichst nahe am Hydrokolben 20 liegende Position gebracht, daß es bei geschlossener Form eine solche Position bezüglich der Verriegelungsstangen 59 einnimmt, das es verriegelt werden kann. Dazu sind die Druckräume beidseits des Hydrokolbens 67 über ein nicht näher dargestelltes drosselndes Steuerventil mit der Druckquelle und mit einem Tank verbindbar. Der beim Justieren sich in dem einen oder dem anderen Druckraum am Hydrokolben 67 einstellende Druck ist wesentlich niedriger als der Systemdruck. Nach dieser Justage werden die beiden Druckräume leckagefrei abgesperrt. Solange dasselbe Werkzeug benutzt wird, ist vom Prinzip her keine weitere Justage notwendig.

Ausgehend von einer geöffneten Form soll nun die Form geschlossen werden. Das Ventil 50 nimmt die Arbeitsstellung ein, in der der Druckraum 24 zum Tank entlastet und der Druckraum 31 an die Pumpenleitung 47 angeschlossen ist. Mit der Pumpenleitung 47 verbunden ist auch der Druckraum 69 über das Ventil 70 und der Druckraum 77 über das Ventil 78. In den Druckräumen herrscht Systemdruck. Die Druckräume 33 und 57 sind über das Ventil 85 zum Tank entlastet. Wird nun die Hubspindel in Richtung auf die feste Formaufspannplatte 10 verfahren, so wird über den Hydrokolben 16 und das sich im Druckraum 31 befindliche vorgespannte, also komprimierte Druckmittelpolster der Hydrokolben 20 mitgenommen, ohne daß das Druckmittel dabei weiter komprimiert würde. Man hat eine quasi starre Verbindung zwischen der Hubspindel 14 und dem Hydrokolben 20. Das Zwischenteil 22 wird von dem Hydrokolben 20 über das Druckmittelpolster im Druckraum 77, die beiden Hydrokolben 75 und 65, die Kolbenstange 68, den Hydrokolben 67 und das Druckmittelpolster in dessen einen Druckraum ebenfalls quasi starr mitgenommen.

Nach dem Schließen der Form wird das Zwischenteil 22 gegenüber dem Maschinengestell verriegelt. Die beiden Ventile 70 und 78 schalten um, so daß die beiden Druckräume 69 und 77 zum Tank entlastet sind. Das Ventil 50 wird in die Arbeitsstellung gebracht, in der die beiden Druckräume 24 und 31 miteinander verbunden sind. Über das Ventil 51 bleibt der Druckraum 38 mit der Pumpenleitung 47 verbunden, so daß der Hydrokolben 35 sicher an dem Anschlag 41 gehalten ist. Wird nun der Hydrokolben 16 in Richtung auf die Formaufspannplatte 10 weiterbewegt, so kann sich in den miteinander verbundenen Druckräumen 24 und 31 ein hoher über dem Systemdruck liegender Zuhaltedruck aufbauen, der an der großen Wirkfläche 25 des Hydrokolbens 20 eine sehr hohe Zuhaltekraft erzeugt. Bei einer dabei noch stattfindenden geringen Bewegung des Hydrokolbens 20 kann der Hydrokolben 75 von dem Hydrokolben 65 ohne weiteres mitgenommen werden, da der Druckraum 77 druckentlastet ist.

Nach dem Einspritzen des Kunststoffs in die Form, nach einer eventuellen Nachdrückphase und nach einer Erstarrungszeit wird die Hubspindel 14 in Richtung von der festen Formaufspannplatte 10 weg verfahren und dadurch das Druckmittel in den Druckräumen 24 und 31 entspannt. Nach dem Entspannen liegt der Hydrokolben 16 mit dem Stößel 32 an dem Hydrokolben 35 an. Das Ventil 50 wird in die Arbeitsstellung gebracht, in der die beiden Druckräume 24 und 31 zum Tank entlastet sind. Das Ventil 51 schaltet um, so daß der Druckraum 38 zum Tank entlastet ist. Das Ventil 78 schaltet um, so daß der Druckraum 77 vom Systemdruck beaufschlagt ist. Das Ventil 85 schaltet um, um die beiden Druckräume 33 und 57 gegen Tank abzusperren. Durch Verfahren der Hubspindel 14 wird nun von dieser über den Hydrokolben 16 und den Stößel 32 der Hydrokolben 35 im Sinne einer Verkleinerung des Druckraums 33 bewegt, so daß aus diesem Druckraum Druckmittel in den Druckraum 57 verdrängt wird. Dort baut sich ein Druck auf, der an dem Hydrokolben 75 eine Kraft erzeugt, die dessen Auflagekraft an der Stufe 80 des Hydrokolbens 20 verringert. Die Reaktionskraft wird über die Hydrokolben 65 und 67 vom Zwischenteil 22 und damit vom Maschinengestell aufgenommen. Letztlich ist die Auflagekraft des Hydrokolbens 75 soweit verringert, daß die überschüssige vom in dem Druckraum 77 herrschenden Systemdruck erzeugte Kraft ausreicht, um die Formhälften voneinander zu trennen. Der Ablauf dieses Aufreißens der Form kann dabei über die Fahrgeschwindigkeit der Hubspindel 14 gesteuert werden. Der Druckraum 69 wird dabei durch die Relativbewegung zwischen dem Hydrokolben 20 und dem Hydrokolben 65 verkleinert.

Nach dem Aufreißen wird die Verriegelung der Zwischenplatte 22 gelöst. Das Ventil 85 schaltet und verbindet die beiden Druckräume 33 und 57 mit Tank. Außerdem schalten die beiden Ventile 51 und 70 um, so daß den Druckräumen 38 und 69 aus der Pumpenleitung 47, wie durch die Düse im jeweiligen Schaltbild angedeutet, gedrosselt Druckmittel zufließen kann. Hydrokolben 12 und Zwischenteil 22 bewegen sich relativ zueinander und zur Hubspindel so, daß sie die in Figur 3 gezeigten Positionen zueinander und zur Hubspindel einnehmen.

Dann wird das Ventil 50 in die Arbeitsstellung gebracht, in der es den Druckraum 31 an die Pumpenleitung 47 anschließt. Der Druckraum 31 wird mit Systemdruck beaufschlagt, so daß im weiteren der Hydrokolben 20 und das Zwischenteil 22 der Bewegung der Hubspindel 14 in Öffnungsrichtung bis in die Öffnungsstellung exakt folgen.

Bei dem Ausführungsbeispiel nach Figur 2 fehlt gegenüber dem Ausführungsbeispiel nach Figur 3 der wirksam und unwirksam zu machende Anschlag für den Hydrokolben 65. Beim Schließen der Form nehmen die Ventile 50, 51 und 70 dieselben Positionen ein wie beim Ausführungsbeispiel nach Figur 3 in derselben Bewegungsphase. Der Hydrokolben 65 liegt kolbenstangenseitig am Hydrokolben 20 an, der Hydrokolben 67 ist gegenüber dem Zwischenteil 22 blockiert.

Wenn die Form geschlossen ist, wird das Zwischenteil 22 durch Druckmittelzufuhr in den einen und Druckmittelabfuhr aus dem anderen Druckraum am Hydrokolben 67 so positioniert, daß es mit den Verriegelungsstangen 59 verriegelt werden kann. Während der Positionierung ist der Druckraum 24 über das Ventil 50 noch mit Tank verbunden, so daß eine Volumenänderung ausgeglichen werden kann. Nach dem Verriegeln des Zwischenteils 22 wird der Hydrokolben 67 durch Verbinden der beiden an ihn angrenzenden Druckräume mit Tank frei bewegbar geschaltet. Das Ventil 50 wird in die Position gebracht, in der die Druckräume 24 und 31 miteinander verbunden sind. Durch eine weitere Bewegung der Hubspindel 14 und damit des Hydrokolben 16 in Schließrichtung baut sich in den Druckräumen 31 und 24 ein hoher Druck auf, der an der großen Wirkfläche 25 eine hohe Zuhaltekraft erzeugt. Bei einer dabei noch stattfindenden geringen Bewegung des Hydrokolbens 20 kann der Hydrokolben 65 ohne weiteres mitgenommen werden, da der Hydrokolben 67 freigeschaltet ist.

Nach dem Einspritzen des Kunststoffs in die Form, nach einer eventuellen Nachdrückphase und nach einer Erstarrungszeit wird die Hubspindel 14 in Richtung von der festen Formaufspannplatte 10 weg verfahren und dadurch das Druckmittel in den Druckräumen 24 und 31 entspannt. Nach dem Entspannen liegt der Hydrokolben 16 mit dem Stößel 32 an dem Hydrokolben 35 an. Das Ventil 50 wird in die Arbeitsstellung gebracht, in der die beiden Druckräume 24 und 31 zum Tank entlastet sind. Das Ventil 51 schaltet um, so daß der Druckraum 38 zum Tank entlastet ist. Der Hydrokolben 67 wird gegenüber dem noch verriegelten Zwischenteil 22 hydraulisch blockiert. Durch Verfahren der Hubspindel 14 wird nun von dieser wie bei dem Ausführungsbeispiel nach Figur 3 über den Hydrokolben 16 und den Stößel 32 der Hydrokolben 35 im Sinne einer Verkleinerung des Druckraums 33 bewegt, so daß aus diesem Druckraum Druckmittel in den Druckraum 57 verdrängt wird. Dort baut sich ein Druck auf, der den Hydrokolben 20 an einer der Ringfläche des Hydrokolbens 65 entsprechenden Fläche unmittelbar beaufschlagt und eine Aufreißkraft erzeugt. Die Reaktionskraft wird über die Hydrokolben 65 und 67 vom Zwischenteil 22 und damit vom Maschinengestell aufgenommen.

Nach dem Aufreißen wird die Verriegelung der Zwischenplatte 22 gelöst. Die beiden Ventile 51 und 70 schalten um, so daß den Druckräumen 38 und 69 aus der Pumpenleitung 47 gedrosselt Druckmittel zufließen kann. Hydrokolben 12 und Zwischenteil 22 bewegen sich relativ zueinander und zur Hubspindel so, daß sie die in Figur 2 gezeigten Positionen zueinander und zur Hubspindel einnehmen.

Dann wird das Ventil 50 in die Arbeitsstellung gebracht, in der es den Druckraum 31 an die Pumpenleitung 47 anschließt. Der Druckraum 31 wird mit Systemdruck beaufschlagt, so daß im weiteren der Hydrokolben 20 und das Zwischenteil 22 der Bewegung der Hubspindel 14 in Öffnungsrichtung bis in die Öffnungsstellung exakt folgen.

Bei dem Ausführungsbeispiel nach Figur 1 nehmen beim Schließen der Form die Ventile 50 und 51 dieselben Positionen ein wie beim Ausführungsbeispiel nach Figur 3 in derselben Bewegungsphase. Die Druckräume 31 und 38 sind also mit der Pumpenleitung 47 verbunden und mit Systemdruck beaufschlagt.

Wenn die Form geschlossen ist, wird das Zwischenteil 22 zum Maschinengestell blockiert. Danach wird das Ventil 50 in die Position gebracht, in der die Druckräume 24 und 31 miteinander verbunden sind. Durch eine weitere Bewegung der Hubspindel 14 und damit des Hydrokolbens 16 in Schließrichtung baut sich in den Druckräumen 31 und 24 ein hoher Druck auf, der an der großen Wirkfläche 25 eine hohe Zuhaltekraft erzeugt.

Nach dem Einspritzen des Kunststoffs in die Form, nach einer eventuellen Nachdrückphase und nach einer Erstarrungszeit wird die Hubspindel 14 in Richtung von der festen Formaufspannplatte 10 weg verfahren und dadurch das Druckmittel in den Druckräumen 24 und 31 entspannt. Nach dem Entspannen liegt der Hydrokolben 16 mit dem Stößel 32 an dem Hydrokolben 35 an. Das Ventil 50 wird in die Arbeitsstellung gebracht, in der die beiden Druckräume 24 und 31 zum Tank entlastet sind. Das Ventil 51 schaltet um, so daß der Druckraum 38 zum Tank entlastet ist. Durch Verfahren der Hubspindel 14 wird nun von dieser wie bei den Ausführungsbeispielen nach den Figuren 2 und 3 über den Hydrokolben 16 und den Stößel 32 der Hydrokolben 35 im Sinne einer Verkleinerung des Druckraums 33 bewegt, so daß aus diesem Druckraum Druckmittel in den Druckraum 57 verdrängt wird. Dort baut sich ein Druck auf, der den Hydrokolben 20 an einer der Wirkfläche des sich an der feststehenden Formaufspannplatte 10 abstützenden Hydrokolbens 55 entsprechenden Fläche unmittelbar beaufschlagt und eine Aufreißkraft erzeugt.

Nach dem Aufreißen wird die Blockierung der Zwischenplatte 22 gelöst. Die Ventile 50 und 51 schalten um, so daß dem Druckräumen 31 und 38 aus der Pumpenleitung 47 gedrosselt Druckmittel zufließen kann. Hydrokolben 12 und Zwischenteil 22 bewegen sich relativ zur Hubspindel so, daß sie die in Figur 1 gezeigten Positionen zur Hubspindel einnehmen. Dann folgen der Hydrokolben 20 und das Zwischenteil der Bewegung der Hubspindel 14 in Öffnungsrichtung bis in die Öffnungsstellung exakt.

## Patentansprüche

1. Antriebsvorrichtung, insbesondere für den Antrieb eines bewegbaren Teils der Schließeinheit oder der Einspritzeinheit einer Kunststoffspritzgießmaschine während einer Stellbewegung und zum anschließenden Aufbau und Ausüben einer großen Kraft,
mit einem durch einen Antriebsmotor (12), insbesondere durch einen Elektromotor, axial verfahrbaren Antriebselement (14),
und mit einer durch Verfahren des Antriebselements (14) in dieselbe Richtung wie dieses verfahrbaren Hydroeinheit (17),
**dadurch gekennzeichnet, daß** die Hydroeinheit (17) ein Kraftübersetzer mit zwei relativ zueinander beweglichen und sich in der Größe ihrer Wirkflächen (30, 25) voneinander unterscheidenden Hydrokolben (16, 20) und mit einem Zwischenteil (22) ist, von dem zusammen mit den Hydrokolben (16, 20) einen mit einer Druckflüssigkeit gefüllten Druckraum (31, 24) einschließbar ist,
daß der die kleinere Wirkfläche (30) aufweisende, erste Hydrokolben (16) mit dem Antriebselement (14) mechanisch verbunden ist,
daß für die Stellbewegung die Hydroeinheit (17) als Ganzes verfahrbar ist,
und daß für die Ausübung einer hohen Kraft durch den die größere Wirkfläche (25) aufweisenden, zweiten Hydrokolben (20) das Zwischenteil (22) gegen eine Verschiebung relativ zu einem ortsfesten Gestell (10) blockierbar ist.

2. Antriebsvorrichtung nach Anspruch 1, wobei der erste Hydrokolben (16) mit seiner Wirkfläche (30) an einen ersten Druckraum (31) in einem oder an einem durch den zweiten Hydrokolben (20) oder durch das Zwischenteil (22) gebildeten Gehäuse angrenzt , der in einer Stellung eines Ventils (50) über dieses fluidisch mit einem zweiten Druckraum (24), der an den zweiten Hydrokolben (20) angrenzt, und in einer anderen Stellung des Ventils (50) mit einer Druckquelle (45) verbindbar ist,
**dadurch gekennzeichnet, daß** ein als Stufenkolben ausgebildeter dritter Hydrokolben (35) mit einer ersten Wirkfläche (40) an einem ersten Kolbenabschnitt (36) und mit einer zweiten Wirkfläche an einem zweiten Kolbenabschnitt (37) vorhanden ist,
daß der dritte Hydrokolben (35) durch Druckbeaufschlagung eines an seine erste Wirkfläche (40) angrenzenden, dritten Druckraums (38) in Richtung der Stellbewegung des ersten Hydrokolbens (16) gegen einen relativ zum Gehäuse (20) ortsfesten Anschlag (41) mit einer Kraft andrückbar ist, die größer ist als die vom Druck im ersten Druckraum (31) auf das Gehäuse (20) in dieselbe Richtung ausgeübte Kraft,
daß der dritte Hydrokolben (35) bei Druckentlastung des dritten Druckraums (38) in Richtung gegen die Stellbewegung vom ersten Hydrokolben (16) von dem Anschlag (41) weg bewegbar ist
und daß der zweite Kolbenabschnitt (37) des dritten Hydrokolbens (35) mit einem vierten Hydrokolben (55, 65), der eine Wirkfläche hat, die größer als die zweite Wirkfläche des dritten Hydrokolbens (35) ist, einen hydraulischen Kraftübersetzer für eine Beaufschlagung des zweiten Hydrokolbens (20) entgegen der Stellbewegung bildet.

3. Antriebsvorrichtung nach Anspruch 2, **dadurch gekennzeichnet, daß** der dritte Hydrokolben (35) in Flucht mit dem ersten Hydrokolben (16) angeordnet ist.

4. Antriebsvorrichtung nach Anspruch 2 oder 3, **dadurch gekennzeichnet, daß** die erste Wirkfläche (40) des dritten Hydrokolbens (35) größer ist als die Wirkfläche (30) des ersten Hydrokolbens (16) und daß der dritte Druckraum (38) und der erste Druckraum (31) mit dem gleichen Druck beaufschlagbar sind.

5. Antriebsvorrichtung nach Anspruch 4, **dadurch gekennzeichnet, daß** der erste Druckraum (31) und der dritte Druckraum (38) zur Beaufschlagung mit demselben Druck mit derselben Druckquelle (45) verbindbar sind.

6. Antriebsvorrichtung nach Anspruch 5, **dadurch gekennzeichnet, daß** der dritte Druckraum (38) über ein schaltbares Ventil (51) mit der Druckquelle (45) verbindbar und von Druck entlastbar ist.

7. Antriebsvorrichtung nach eine der Ansprüche 2 bis 6, **dadurch gekennzeichnet, daß** der vierte Hydrokolben (65) an einen Druckraum (57) mit einer relativ zum Maschinengestell (10) ortsfesten Begrenzungswand angrenzt.

8. Antriebsvorrichtung nach einem der Ansprüche 2 bis 6, **dadurch gekennzeichnet, daß** der vierte Hydrokolben (65) bezüglich des Zwischenteils. (22) oder des zweiten Hydrokolbens fixierbar oder fixiert ist und mit dem jeweils anderen Teil (20) der beiden Teile Zwischenteil und Hydrokolben einen Druckraum (57) begrenzt, der mit einem Druckraum (33) am zweiten Kolbenabschnitt (37) des dritten Hydrokolbens (35) verbunden ist.

9. Antriebsvorrichtung nach Anspruch 8, **dadurch gekennzeichnet, daß** sich der vierte Hydrokolben (65) im oder am Zwischenteil oder zweiten Hydrokolben (20) befindet und über eine Kolbenstange (68) mit einem fünften Hydrokolben (67) im jeweils anderen Teil (22) verbunden ist.

10. Antriebsvorrichtung nach Anspruch 9, **dadurch gekennzeichnet, daß** ein sechster Hydrokolben (75) durch Druckbeaufschlagung eines an einer Wirkfläche von ihm angrenzenden Druckraums (77) gegen einen relativ zu dem Teil (20), in dem sich der vierte Hydrokolben befindet (65), ortsfesten Anschlag (80) andrückbar ist, daß der vierte Hydrokolben (65) mit einer kleineren Kraft als diejenige, mit der der sechste Hydrokolben (75) gegen den Anschlag (80) andrückbar ist, im Sinne eines Abhebens des sechsten Hydrokolbens (75) von dem Anschlag (80) gegen den sechsten Hydrokolben (75) drückbar ist und daß bei einer Druckentlastung des sechsten Hydrokolbens (75) dieser durch den vierten Hydrokolben (65) von dem Anschlag (80) abhebbar.

11. Antriebsvorrichtung nach einem der Ansprüche 8 bis 10, **dadurch gekennzeichnet, daß** der sechste Hydrokolben (75) in Richtung auf den Anschlag (80) und der vierte Hydrokolben (65) im Sinne eines Abhebens des sechsten Hydrokolbens (75) von dem Anschlag (80) an ungleich großen Wirkflächen (79, 71) mit demselben Druck beaufschlagbar sind.

12. Antriebsvorrichtung nach einem der Ansprüche 8 bis 11, **dadurch gekennzeichnet, daß** der sechste Hydrokolben (75) in Flucht zum vierten Hydrokolben (65) angeordnet ist und einen zentralen Durchbruch für eine mit dem vierten Hydrokolben (65) verbundene Kolbenstange (68) aufweist.

13. Antriebsvorrichtung nach einem der Ansprüche 2 bis 12, **dadurch gekennzeichnet, daß** der vierte Hydrokolben (65) im oder am selben Gehäuse (20) wie der erste Hydrokolben (16) und der dritte Hydrokolben (35) angeordnet ist.

14. Antriebsvorrichtung nach einem der Ansprüche 10 bis 12, **dadurch gekennzeichnet, daß** der vierte Hydrokolben (65) und der sechste Hydrokolben (75) im oder am selben Gehäuse (20) wie der erste Hydrokolben (16) und der dritte Hydrokolben (35) angeordnet sind.

## Claims

1. A drive device, in particular for driving a movable part of a closing unit or of an injection unit of a plastic injection moulding machine during an adjusting movement and for subsequent build-up and exertion of a high force, comprising
a drive element (14) movable axially by means of a drive motor (12), in particular by means of an electric motor,
a hydraulic unit (17) movable as a result of movement of the drive element (14) in same direction as the latter,
**characterized by** the fact that the hydraulic unit (17) is a force intensifier with two hydraulic pistons (16, 20) movable in relation to one another and differing from one another in the size of their active surfaces (30, 25) and with an intermediate part (22) which together with the hydraulic pistons (16, 20) can enclose a pressure space (31, 24) filled with a pressure fluid,
that the first hydraulic piston (16) having the smaller active surface (30) is connected mechanically to the drive element (14),
that for the adjusting movement, the hydraulic unit (17) is movable as a whole, and that for exerting a high force by means of the second hydraulic piston (20) having the larger active surface (25), the intermediate part (22) can be blocked against displacement in relation to a fixed stand (10).

2. A drive device according to claim 1 whereby, the first hydraulic piston (16) being adjacent with its active surface (30) to a first pressure space (31) in or on a housing formed by the second hydraulic piston (20) or by the intermediate part (22), said pressure space can be fluidically connected to a second pressure space (24), which is adjacent to the second hydraulic piston (20), in one position of a valve (50), via the latter, and to a pressure source (45) in another position of the valve (50),
**characterized by** the fact that a third hydraulic piston (35) designed as a stepped piston is present with a first active surface (40) at a first piston portion (36) and with a second active surface at a second piston portion (37),
that the third hydraulic piston (35), by action of pressure upon a third pressure space (38) adjacent to its first active surface (40), can be pressed in the direction of the adjusting movement of the first hydraulic piston (16) against a stop (41) fixed in relation to the housing (20), with a force which is higher than the force exerted on the housing (20) in the same direction by the pressure in the first pressure space (31),
that when the third pressure space (38) is relieved of pressure, the third hydraulic piston (35) can be moved away from the stop (41) in the direction opposite to the adjusting movement of the first hydraulic piston (16),
and that the second piston portion (37) of the third hydraulic piston (35) forms, with a fourth hydraulic piston (55, 65) having an active surface larger than the second active surface of the third hydraulic piston (35), a hydraulic force intensifier for acting upon the second hydraulic piston (20) opposite to the adjusting movement.

3. A drive device according to claim 2, **characterized by** the fact that the third hydraulic piston (35) is arranged in alignment with the first hydraulic piston (16).

4. A drive device according to claim 2 or 3, **characterized by** the fact that the first active surface (40) of the third hydraulic piston (35) is larger than the active surface (30) of the first hydraulic piston (16), and that the third pressure space (38) and the first pressure space (31) can be acted upon by the same pressure.

5. A drive device according to claim 4, **characterized by** the fact that the first pressure space (31) and the third pressure space (38) can be connected to the same pressure source (45) in order to be acted upon by the same pressure.

6. A drive device according to claim 5, **characterized by** the fact that the third pressure space (38) via a switchable valve (51) can be connected to the pressure source (45) and can be relieved of pressure.

7. A drive device according to any of claims 2 to 6, **characterized by** the fact that the fourth hydraulic piston (65) is adjacent, with a boundary wall fixed in relation to the machine stand (10), to a pressure space (57).

8. A drive device according to any of claims 2 to 6, **characterized by** the fact that the fourth hydraulic piston (65) is fixable or is fixed with respect to the intermediate part (22) or to the second hydraulic piston and, in each case with the other part (20) of the two parts, intermediate part and hydraulic piston, delimits a pressure space (57) which is connected to a pressure space (33) at the second piston portion (37) of the third hydraulic piston (35).

9. A drive device according to claim 8, **characterized by** the fact that the fourth hydraulic piston (65) is located in or at the intermediate part or the second hydraulic piston (20) and is connected to a fifth hydraulic piston (67) in each case in the other part (22) via a piston rod (68).

10. A drive device according to claim 9, **characterized by** the fact that a sixth hydraulic piston (75), by the action of pressure upon a pressure space (77) adjacent to an active surface of said sixth hydraulic piston (75), can be pressed against a stop (80) which is fixed in relation to part (20) in which the fourth hydraulic piston (65) is located, that the fourth hydraulic piston (65) can be pressed, with a lower force than that with which the sixth hydraulic piston (75) is pressable against the stop (80), against the sixth hydraulic piston (75) with the effect of lifting off the sixth hydraulic piston (75) from the stop (80), and that, when the sixth hydraulic piston (75) is relieved of pressure, the latter can be lifted off from the stop (80) by the fourth hydraulic piston (65).

11. A drive device according to any of claims 8 to 10, **characterized by** the fact that the sixth hydraulic piston (75) can be acted upon, in the direction of the stop (80), and the fourth hydraulic piston (65) can be acted upon, with the effect of lifting off the sixth hydraulic piston (75) from the stop (80), by the same pressure at active surfaces (79, 71) of unequal size.

12. A drive device according to any of claims 8 to 11, **characterized by** the fact that the sixth hydraulic piston (75) is arranged in alignment with the fourth hydraulic piston (65) and has a central perforation for a piston rod (68) connected to the fourth hydraulic piston (65).

13. A drive device according to any of claims 2 to 12, **characterized by** the fact that the fourth hydraulic piston (65) is arranged in or on the same housing (20) as the first hydraulic piston (16) and the third hydraulic piston (35).

14. A drive device according to any of claims 10 to 12, **characterized by** the fact that the fourth hydraulic piston (65) and the sixth hydraulic piston (75) are arranged in or on the same housing (20) as the first hydraulic piston (16) and the third hydraulic piston (35).

## Revendications

1. Dispositif d' entraînement, en particulier pour l' entraînement d'une partie mobile de l'unité de fermeture ou de l' unité d'injection d'une machine à mouler le plastique par injection pendant un mouvement de positionnement et consécutivement pour l' établissement et l'application d'une force importante, doté d'un élément (14) d'entraînement qu'un moteur (12) d'entraînement, en particulier un moteur électrique, peut déplacer dans la direction axiale,
et doté d'une unité (17) hydraulique, que le mouvement de l'élément (14) d' entraînement déplace dans le même sens que ce dernier,
**caractérisé en ce que** l' unité (17) hydraulique est un multiplicateur de force doté de deux pistons (16, 20) hydrauliques, qui peuvent se déplacer l'un par rapport à l' autre et qui se distinguent par la taille de leurs surfaces (30, 25) actives, et doté d'un élément (22) intermédiaire, qui conjointement avec les pistons (16, 20) hydrauliques permet de refermer une chambre (31, 24) de pression remplie d' un fluide de pression,
que le premier piston (16) hydraulique, présentant la surface (30) active plus petite, est relié à l' élément (14) d'entraînement par voie mécanique,
que l'unité (17) hydraulique dans son ensemble peut être déplacée pour le mouvement de positionnement
et que pour que le deuxième piston (20) hydraulique, qui présente la surface (25) active plus grande, puisse exercer une force élevée, l' élément (22) intermédiaire peut être verrouillé contre tout déplacement par rapport à un bâti (10) fixe.

2. Dispositif d' entraînement selon la revendication n° 1, cependant que le premier piston (16) hydraulique par sa surface (30) active est limitrophe avec une première chambre (31) de pression dans ou au niveau d'un corps formé par le deuxième piston (20) hydraulique ou par l'élément (22) intermédiaire, qu' une valve (50) dans une de ses positions peut relier par voie fluide à une seconde chambre (24) de pression, limitrophe avec le deuxième piston (20) hydraulique, et que la valve (50) dans une autre position peut relier à une source (45) de pression, **caractérisé en ce qu'** est prévu un troisième piston (35) hydraulique conçu sous forme de piston étagé, doté d'une première surface (40) active au niveau d'un premier segment (36) de piston et d'une seconde surface active au niveau d'un second segment (37) de piston,
qu' en soumettant à la pression une troisième chambre (38) de pression, limitrophe avec sa première surface (40) active, le troisième piston (35) hydraulique peut être appliqué contre une butée (41) fixe par rapport au corps (20), dans le sens du mouvement de positionnement du premier piston (16) hydraulique, avec une force supérieure à celle exercée sur le corps (20) dans le même sens par la pression dans la première chambre (31) de pression,
que, lorsque la troisième chambre (38) de pression est déchargée de toute pression, le troisième piston (35) hydraulique peut être déplacé dans le sens opposé au mouvement de positionnement du premier piston (16) hydraulique, pour l' éloigner de la butée (41),
et que, conjointement avec un quatrième piston (55, 65) hydraulique présentant une surface active supérieure à la seconde surface active du troisième piston (35) hydraulique, le second segment (37) de piston du troisième piston (35) hydraulique forme un multiplicateur de force hydraulique permettant de solliciter le deuxième piston (20) hydraulique dans le sens opposé au mouvement de positionnement.

3. Dispositif d' entraînement selon la revendication n° 2, **caractérisé en ce que** le troisième piston (35) hydraulique est aligné sur le premier piston (16) hydraulique.

4. Dispositif d' entraînement selon la revendication n° 2 ou n° 3, **caractérisé en ce que** la première surface (40) active du troisième piston (35) hydraulique est plus grande que la surface (30) active du premier piston (16) hydraulique et que la troisième chambre (38) de pression et la première chambre (31) de pression peuvent être soumises à la même pression.

5. Dispositif d' entraînement selon la revendication n° 4, **caractérisé en ce que** la première chambre (31) de pression et la troisième chambre (38) de pression peuvent être reliées à la même source (45) de pression pour être soumises à la même pression.

6. Dispositif d' entraînement selon la revendication n° 5, **caractérisé en ce que** la troisième chambre (38) de pression peut être reliée à la source (45) de pression ou déchargée de toute pression par une valve (51) de commutation.

7. Dispositif d' entraînement selon une des revendications n° 2 à n° 6, **caractérisé en ce que** le quatrième piston (65) hydraulique est limitrophe avec une chambre (57) de pression avec une cloison de délimitation fixe par rapport au bâti (10) de la machine.

8. Dispositif d' entraînement selon une des revendications n° 2 à n° 6, **caractérisé en ce que** le quatrième piston (65) hydraulique peut être fixé ou est fixe par rapport à la partie (22) intermédiaire ou au deuxième piston hydraulique et délimite, avec l' autre élément (20) correspondant des deux éléments partie intermédiaire ou piston hydraulique, une chambre (57) de pression, qui est reliée à une chambre (33) de, pression au niveau du second segment (37) de piston du troisième piston (35) hydraulique.

9. Dispositif d'entraînement selon la revendication n° 8, **caractérisé en ce que** le quatrième piston (65) hydraulique est disposé dans ou au niveau de la partie intermédiaire ou deuxième piston hydraulique (20) et est relié par une tige (68) de vérin à un cinquième piston (67) hydraulique dans l' autre élément (22) correspondant.

10. Dispositif d' entraînement selon la revendication n° 9, **caractérisé en ce qu'** un sixième piston (75) hydraulique peut être appliqué contre une butée (80), qui est fixe par rapport à l'élément (20) où est disposé le quatrième piston (65) hydraulique, par mise sous pression d'une chambre (77) de pression limitrophe avec une de ses surfaces d' action,
que le quatrième piston (65) hydraulique peut être appliqué contre le sixième piston (75) hydraulique avec une force inférieure à celle avec laquelle le sixième piston (75) hydraulique peut être appliqué contre la butée (80), dans le sens d'un soulèvement du sixième piston (75) hydraulique par rapport à la butée (80),
et que, lorsque le sixième piston (75) hydraulique est déchargé de toute pression, le quatrième piston (65) hydraulique peut le soulever par rapport à la butée (80).

11. Dispositif d'entraînement selon une des revendications n° 8 à n° 10, **caractérisé en ce que** le sixième piston (75) hydraulique dans le sens de la butée (80) et le quatrième piston (65) hydraulique dans le sens d'un soulèvement du sixième piston (75) hydraulique par rapport à la butée (80) peuvent être soumis à la même pression au niveau de surfaces (79, 71) d'action de tailles différentes.

12. Dispositif d'entraînement selon une des revendications n° 8 à n° 11, **caractérisé en ce que** le sixième piston (75) hydraulique est aligné sur le quatrième piston (65) hydraulique et présente un perçage central pour une tige (68) de vérin, qui est reliée au quatrième piston (65) hydraulique.

13. Dispositif d' entraînement selon une des revendications n° 2 à n° 12, **caractérisé en ce que** le quatrième piston (65) hydraulique est disposé dans le ou au niveau du même corps (20) que le premier piston (16) hydraulique et le troisième piston (35) hydraulique.

14. Dispositif d' entraînement selon une des revendications n° 10 à n° 12, **caractérisé en ce que** le quatrième piston (65) hydraulique et le sixième piston (75) hydraulique sont disposés dans le ou au niveau du même corps (20) que le premier piston (16) hydraulique et le troisième piston (35) hydraulique.
